# EUROPEAN PATENT APPLICATION

(11) **EP 2 952 283 A1**
(43) Date of publication of application: **09.12.2015**
(21) Application number: 14746500.9
(22) Date of filing: 07.01.2014
(51) Int. Cl.: B23K 26/21, B23K 26/08, F16L 13/02

(54) **MEMBER-JOINING METHOD, JOINED MEMBER STRUCTURE, AND JOINT TUBE**

(30) Priority: 01.02.2013 JP 2013018783
(71) Applicant: Olympus Corporation, Shibuya-ku Tokyo 151-0072 (JP)
(72) Inventor: ASAMI Keiichi, Tokyo 151-0072 (JP); IMAMURA Tomonori, Tokyo 151-0072 (JP); TAKIGUCHI Kinji, Tokyo 151-0072 (JP)
(74) Representative: Schicker, Silvia
(86) International application number: PCT/JP2014/050074
(87) International publication number: WO 2014/119342

(57) **Abstract**

A member joining method of joining a first plate-shaped section (2a) of a first member (2) and a second plate-shaped section (3a) of a second member (3) by laser welding, the member joining method including: a member disposing process of disposing the first member (2) and the second member (3) such that the first plate-shaped section (2a) and the second plate-shaped section (3a) overlap in a thickness direction, a first laser radiating process of forming a melted section (4A) by radiating a laser beam (L1) to the first plate-shaped section (2a) overlapping the second plate-shaped section (3a), and a second laser radiating process of, after solidifying the melted section (4A) to form a melted solidification section (4a), radiating a laser beam to a surface of the melted solidification section (4a) so as to forcus the laser beam on the first plate-shaped section (2a) through the melted solidification section (4a), melting the melted solidification section (4a) and the second plate-shaped section (3a) opposite to the melted solidification section (4a) to form a welding section (4b) formed of an alloy thereof, and joining the first plate-shaped section (2a) and the second plate-shaped section (3a) via the welding section (4b).

## Description

### [Technical Field]

The present invention relates to a member joining method, a member joining structure, and a joint pipe.

Priority is claimed on Japanese Patent Application No. 2013-18783, filed February 1, 2013, the content of which is incorporated herein by reference.

### [Background Art]

In the related art, for example, when a joint pipe is formed by connecting another pipe member to a distal end of a pipe member or connecting a branch pipe to a side surface of the pipe member, the pipe members may be joined by laser welding. That is, a member joining method of inserting an end section of one pipe member into an end section of another pipe member, overlapping the pipe members in a thickness direction and radiating a laser beam to the overlapping part to weld the pipe members, a member joining structure manufactured using the method, and a joint pipe are known.

In addition, as disclosed in Patent Document 1, a technology of connecting pipe members by inserting an end section of one pipe member into an end section of another pipe member, overlapping the pipe members in a thickness direction, and enlarging an inner diameter of the end section of the inside-disposed pipe member in the overlapping part is also known.

### [Prior Art Document]

### [Patent Document]

[Patent Document 1] Japanese Patent Publication No. 2868750

### [Summary of Invention]

### [Technical Problem]

The member joining methods, the member joining structures, and the joint pipes of the related art have the following problems.

When the members are joined by laser welding, if a gap of the overlapping part of the pipe members is too large, thermal conduction of the pipe members is disturbed by the gap. For this reason, various welding defects are likely to occur. For example, the melted section of the one pipe member, to which the laser beam is radiated, is solidified without sufficiently melting the other overlapping pipe member, which decreases welding strength, or the melted material may easily flow into the gap and a hole is likely to be formed in the one pipe member.

In addition, for example, in the joint pipe or the like used for an endoscope, the joining section may need to be formed on the entire circumference of the joint pipe to form the water-tightly (liquid-tightly) joining section. In this case, even when the joining strength is sufficient, if welding defects are present in a portion in the circumferential direction, the water-tightness (liquid-tightness) is lost. In order to solve the above-mentioned problems, reducing an error of pipe diameters of the pipe members is considered. However, in this case, since machining precision of the end section of the pipe member should be increased, parts cost is increased. In addition, when the pipe members are tightly fitted, workability of insertion of the pipe members is deteriorated.

As another method, as disclosed in Patent Document 1, overlapping the pipe members with a sufficient gap and then reducing the gap by enlarging the pipe diameter of the inner pipe member is considered. However, in this case, a tool for enlarging the pipe diameter should be inserted into the pipe. The method cannot be applied to a joining to a member into which such a tool cannot be easily inserted, for example, the joining of curved pipes, or the like.

The above-mentioned welding defects may be generated when an unallowable gap is likely to be generated between the joining members, and may also be generated by, for example, joining of flat plates, without being limited to the pipe members.

The present invention has been made in consideration of the above-mentioned problems, and an object of the invention is to provide a member joining method, a member joining structure, and a joint pipe that are capable of easily preventing welding defects even when a gap is generated between the members, which are laser-welded.

### [Solution to Problem]

According to a first aspect of the present invention, a member joining method of joining a first plate-shaped section of a first member and a second plate-shaped section of a second member by laser welding, the member joining method including: a member disposing process of disposing the first member and the second member such that the first plate-shaped section and the second plate-shaped section overlap in a thickness direction; a first laser radiating process of forming a melted section in which the first plate-shaped section is melted in the thickness direction by radiating a laser beam to the first plate-shaped section in a region overlapping the second plate-shaped section; and a second laser radiating process of, after solidifying the melted section to form a melted solidification section, radiating a laser beam to a surface of the melted solidification section so as to forcus the laser beam on the second plate-shaped section through the melted solidification section, melting the melted solidification section and the second plate-shaped section which is faced to the melted solidification section, forming a welding section formed of an alloy from a material of the first plate-shaped section and a material of the second plate-shaped section, and joining the first plate-shaped section and the second plate-shaped section via the welding section.

According to a second aspect of the present invention, in the first laser radiating process of the member joining method according to the first aspect, the laser beam may be pulse-radiated, and in the second laser radiating process, the laser beam may be continuously radiated.

According to a third aspect of the present invention, in the member joining method of the first or second aspect, in the first laser radiating process, a radiation position of the laser beam may be relatively moved with respect to the first plate-shaped section such that the melted section is formed to be continued in a belt shape.

According to a fourth aspect of the present invention, in the member joining method of any one of the first to third aspects, in the second laser radiating process, the laser beam may be radiated to a region inside the surface of the melted solidification section.

According to a fifth aspect of the present invention, in the member joining method of any one of the first to fourth aspects, the first plate-shaped section and the second plate-shaped section may be formed in a tubular shape. In the member disposing process, the second plate-shaped section may be inserted and disposed into the first plate-shaped section.

According to a sixth aspect of the present invention, in the member joining method of the fifth aspect, in the first laser radiating process, the melted section may be formed to continue throughout the entire circumference of the first plate-shaped section. In the second laser radiating process, the welding section may be formed to continue throughout the entire circumference of the first plate-shaped section and the second plate-shaped section.

A seventh aspect of the present invention provides a member joining structure formed by disposing a first plate-shaped section of a first member and a second plate-shaped section of a second member to overlap, and joining the members by laser welding, the member joining structure including: a welding section formed of an alloy of a material of the first plate-shaped section and a material of the second plate-shaped section, and formed in a thickness direction of a region in which the first plate-shaped section and the second plate-shaped section overlap; and a melted solidification section formed by melting and solidifying the first plate-shaped section in a region adjacent to the welding section.

According to an eighth aspect of the present invention, in the member joining structure of the seventh aspect, the welding section may have a surface of an end section of the first plate-shaped section side more concaved than a surface of the melted solidification section.

A ninth aspect of the present invention provides a joint pipe formed by inserting a second pipe member into a first pipe member, and joining the first pipe member and the second pipe member by laser welding at a position at which the first pipe member and the second pipe member overlap in a radial direction, the joint pipe including: a welding section formed of an alloy of a material of the first pipe member and a material of the second pipe member, and formed in a thickness direction at a region in which the first pipe member and the second pipe member overlap; and a melted solidification section formed by melting and solidifying the first pipe member at a region adjacent to the welding section.

### [Advantageous Effects of Invention]

According to the member joining method, the member joining structure, and the joint pipe, as the laser radiation is performed in a two-step manner, even when the gap is likely to be generated between the members, which are laser-welded, the welding defects can be easily prevented.

### [Brief Description of Drawings]

Fig. 1 is a schematic partial cross-sectional view showing a member joining structure according to a first embodiment of the present invention, when seen in a front view.
Fig. 2A is a partially enlarged view when seen in an arrow A direction of Fig. 1.
Fig. 2B is a cross-sectional view taken along line B-B of Fig. 2A.
Fig. 3 is a flowchart showing a process flow of a member joining method according to a first embodiment of the present invention.
Fig. 4A is a process description view showing a first laser radiating process and a second laser radiating process of the member joining method according to the first embodiment of the present invention.
Fig. 4B is a process description view showing the first laser radiating process and the second laser radiating process of the member joining method according to the first embodiment of the present invention.
Fig. 4C is a process description view showing the first laser radiating process and the second laser radiating process of the member joining method according to the first embodiment of the present invention.
Fig. 4D is a process description view showing the first laser radiating process and the second laser radiating process of the member joining method according to the first embodiment of the present invention.
Fig. 5A is a schematic cross-sectional view for describing a modified example of a melted solidification section of the member joining method according to the first embodiment of the present invention.
Fig. 5B is a schematic cross-sectional view for describing a modified example of the melted solidification section of the member joining method according to the first embodiment of the present invention.
Fig. 5C is a schematic cross-sectional view for describing a modified example of the melted solidification section of the member joining method according to the first embodiment of the present invention.
Fig. 6A is a plan view showing a member joining structure according to a first modified example of the first embodiment of the present invention.
Fig. 6B is a cross-sectional view taken along line C-C of Fig. 6A.
Fig. 7A is a plan view showing a member joining structure according to a second modified example of the first embodiment of the present invention.
Fig. 7B is a cross-sectional view taken along line D-D of Fig. 7A.
Fig. 8A is a process description view of a first laser radiating process of a member joining method according to the second modified example of the first embodiment of the present invention.
Fig. 8B is a process description view of the first laser radiating process of the member joining method according to the second modified example of the first embodiment of the present invention.
Fig. 8C is a process description view of a second laser radiating process of the member joining method according to the second modified example of the first embodiment of the present invention.
Fig. 8D is a process description view of the second laser radiating process of the member joining method according to the second modified example of the first embodiment of the present invention.
Fig. 9A is a plan view showing a member joining structure according to a third modified example of the first embodiment of the present invention.
Fig. 9B is a cross-sectional view taken along line E-E of Fig. 9A.
Fig. 10A is a schematic perspective view showing a member joining structure according to a second embodiment of the present invention.
Fig. 10B is a plan view when seen in an arrow F direction of Fig. 10A.

### [Description of Embodiments]

Hereinafter, embodiments of a member joining method, a member joining structure, and a joint pipe according to the present invention will be described with reference to the accompanying drawings. Throughout the drawings, even when the embodiments are different, the same or corresponding members are designated by the same reference numerals, and a detailed description thereof will be omitted.

### [First embodiment]

A member joining structure according to a first embodiment of the present invention will be described.

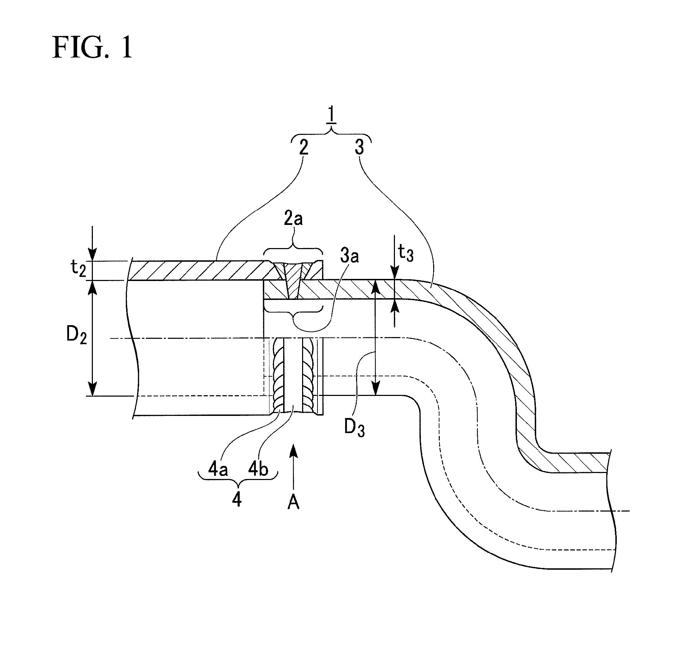

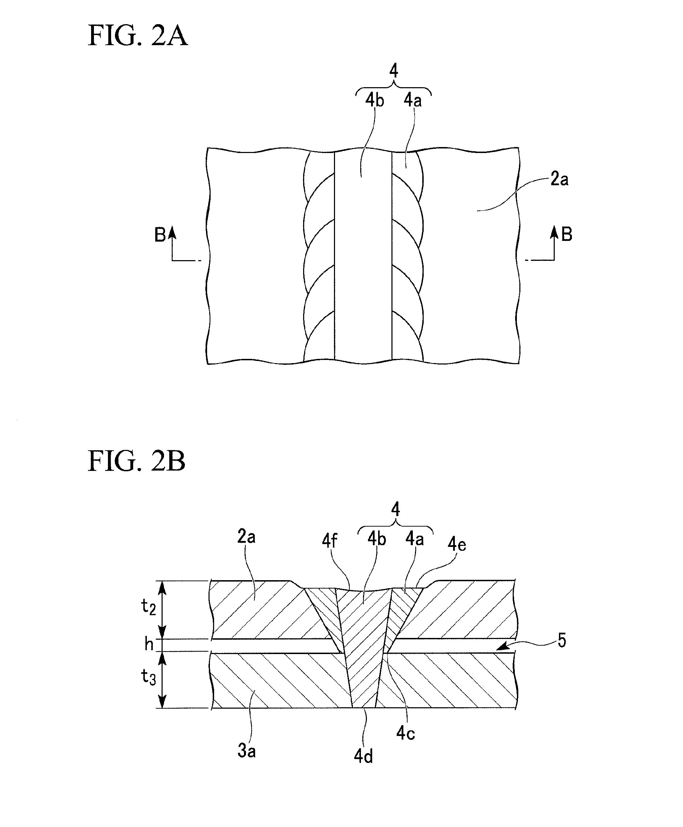

Fig. 1 is a schematic partial cross-sectional view showing the member joining structure according to the first embodiment of the present invention, when seen in a front view. Fig. 2A is a partially enlarged view when seen in an arrow A direction of Fig. 1. Fig. 2B is a cross-sectional view taken along line B-B of Fig. 2A.

The member joining structure according to the embodiment is a member joining structure in which a first plate-shaped section of a first member and a second plate-shaped section of a second member are overlapped and joined by laser welding.

The shapes of the first plate-shaped section and the second plate-shaped section are not particularly limited as long as the sections can overlap and a laser beam can be radiated from a surface side of the first plate-shaped section. Here, a "plate shape" includes, for example, a shape of a member having a thickness and curved like a wall surface that constitutes a pipe member.

In addition, a material of the first plate-shaped section and the second plate-shaped section is not particularly limited as long as the sections are formed of a laser-weldable material.

Hereinafter, the member joining structure according to the embodiment will be described by showing an example of a joint pipe 1 shown in Fig. 1.

The joint pipe 1 is a member which is joined a first pipe member 2 (a first member) and a second pipe member 3 (a second member) by laser welding.

The first pipe member 2 is, for example, a tubular member having a thickness t₂ used as a part of an endoscope configured to supply gases or fluids. The first pipe member 2 has a straight circular pipe section, at least one side of a first end section 2a (a first plate-shaped section) of which has an inner diameter D₂.

The material of the first pipe member 2 may be formed of, for example, stainless steel, aluminum, titanium, or the like. In the embodiment, for example, a stainless steel pipe having the thickness t₂ = 0.4 (mm) and the inner diameter D₂ = ϕ4 (mm) is employed. Here, these dimensions are actual sizes.

The second pipe member 3 is a tubular member having a thickness t₃ joined to the first end section 2a of the first pipe member 2, and has a second end section 3a (a second plate-shaped section) which is formed of a circular pipe section fitted into the first end section 2a and has an outer diameter D₃.

A material of the second pipe member 3 may be, for example, stainless steel, aluminum, titanium, or the like. In the embodiment, a stainless steel pipe of the thickness t₃ = 0.3 (mm) and the outer diameter D₃ = ϕ3.9 (mm) is employed. Here, these dimensions are actual sizes.

When nominal dimensions of the outer diameter D₃ of the second end section 3a and the inner diameter D₂ of the first end section 2a are equal to each other, while the fitting of the pipe members may be a fitting type in which the second end section 3a can be inserted into the first end section 2a, a gap fitting type may be preferable because the members can be easily inserted through only a manual operation.

In general, in the laser welding, when a gap of about 10% or more with respect to a thickness of members to be welded of a laser radiation side (in the embodiment, the first pipe member 2) is generated with respect to the members to be welded, welding defects are likely to occur.

However, since the member joining method to be described below is used in the embodiment, even when a gap of about 30% or less of the thickness t₂, i.e., about 0.12 mm of less in dimension, is provided between the pipe members, it is possible to good laser welding.

In the embodiment, the maximum gap between the first pipe member 2 and the second pipe member 3 is the inner diameter D₂-the outer diameter D₃ = 0.1 (mm). For this reason, in a state in which the second end section 3a is inserted into the first end section 2a, a gap of 25% of the thickness t₂ is maximally formed in the radial direction.

A shape of a part except for the first end section 2a and the second end section 3a in the first pipe member 2 and the second pipe member 3 is not particularly limited as long as the laser beam can be radiated to the outer surface of the first end section 2a. In the example shown in Fig. 1, the first pipe member 2 is a straight circular pipe, and the second pipe member 3 is a Z-shaped tubular member having two bent sections bent near the second end section 3a at a substantially right angle.

The first end section 2a and the second end section 3a are joined via a joining section 4 which is formed to continue throughout the entire circumference in a state in which the sections overlap in the radial direction.

As shown in Figs. 2A and 2B, the joining section 4 includes a melted solidification section 4a and a welding section 4b. The melted solidification section 4a is formed by melting and solidifying a material of the first end section 2a only. The welding section 4b is formed of an alloy composed of elements obtained by melting the materials of the first end section 2a and the second end section 3a.

The melted solidification section 4a is formed to be slightly depressed from the outer surface of the first end section 2a toward the second end section 3a and formed in a trapezoidal shape in which a cross-sectional shape in a thickness direction is narrowed toward the second end section 3a along the central axis (see Fig. 1) of the first end section 2a. A distal end surface 4c of the second end section 3a side is penetrated into a gap 5 formed between the first end section 2a and the second end section 3a to abut or approach the surface of the second end section 3a.

In Fig. 2B, a dimension of the gap 5 is represented as h, and h is varied depending on a place and represented as 0 ≦ h ≦ (the inner diameter D₂-the outer diameter D₃).

The melted solidification section 4a is formed in a belt shape that continues in the circumferential direction (a longitudinal direction of Fig. 2A) of the first end section 2a. In the embodiment, since the sections are intermittently formed in the circumferential direction by pulse radiation of the laser beam as will be described below, a scale shape pattern in which a plurality of substantial fan shapes continue in the circumferential direction is formed at the surface 4e (see Fig. 2B) of the melted solidification section 4a near the first end section 2a.

The welding section 4b which has a belt shape having a smaller width than that of the melted solidification section 4a is formed to continue throughout the entire circumference in the circumferential direction in the central section in a widthwise direction (a lateral direction of Fig. 2A) of the melted solidification section 4a. A cross-sectional shape in a thickness direction along the central axis (see Fig. 1) of the first end section 2a is formed in a trapezoidal shape which is narrowed toward the second end section 3a from the melted solidification section 4a of the outer surface side of the first end section 2a to the second end section 3a in the thickness direction.

For this reason, the welding section 4b passes through the distal end surface 4c of the melted solidification section 4a and divides the melted solidification section 4a into two parts in the axial direction (the lateral direction of Fig. 2B) of the first end section 2a. A distal end surface 4d of the welding section 4b is exposed to the surface of the second end section 3a opposite to the first end section 2a.

Accordingly, the melted solidification sections 4a approach both sides in the widthwise direction of the welding section 4b to sandwich the welding section 4b therebetween.

In the embodiment, as will be described below, the welding section 4b is formed by continuously radiating a laser beam to an overlapping part of the melted solidification section 4a and the second end section 3a. For this reason, unlike a surface 4e of the melted solidification section 4a, a surface 4f (see Fig. 2B) of the welding section 4b near the first end section 2a becomes a smoothly concave surface slightly more concave than the surface 4e, without forming the scale shape pattern.

In the welding section 4b, composition distribution of the alloy may be varied depend on a place as long as the melted solidification section 4a and the second end section 3a are mixed and integrated. Accordingly, for example, when the plate thicknesses of the first end section 2a and the second end section 3a are large, the composition distribution or the like in which the part formed of only the material of the first end section 2a or the second end section 3a remains can be allowed at the end section in the thickness direction of the welding section 4b.

In the joining section 4 having the above-mentioned configuration, since the melted solidification section 4a and the second end section 3a are joined by the welding section 4b which is formed to bridge the gap 5 in the thickness direction, the gap 5 is blocked in the axial direction of the first end section 2a by the welding section 4b. For this reason, in the embodiment, since the liquid or gas that flows into the gap 5 cannot move beyond the joining section 4, the first end section 2a and the second end section 3a are joined while holding a water-tight (liquid-tight) state or an air-tight state.

Next, a member joining method according to the embodiment that forms the joining section 4 serving as the member joining structure according to the embodiment will be described.

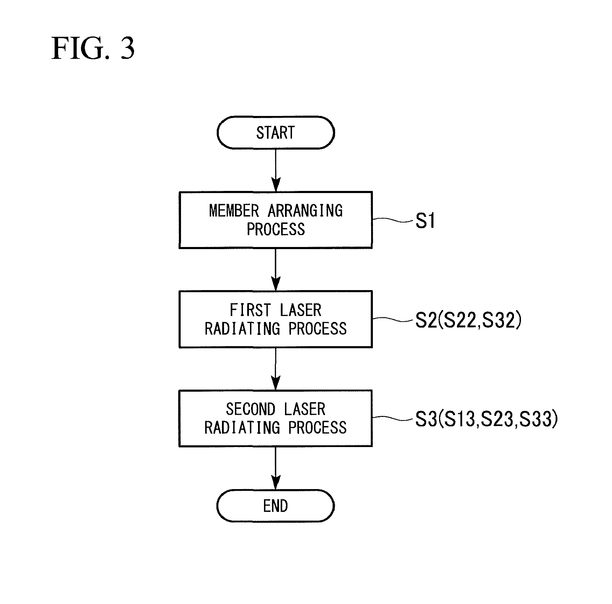

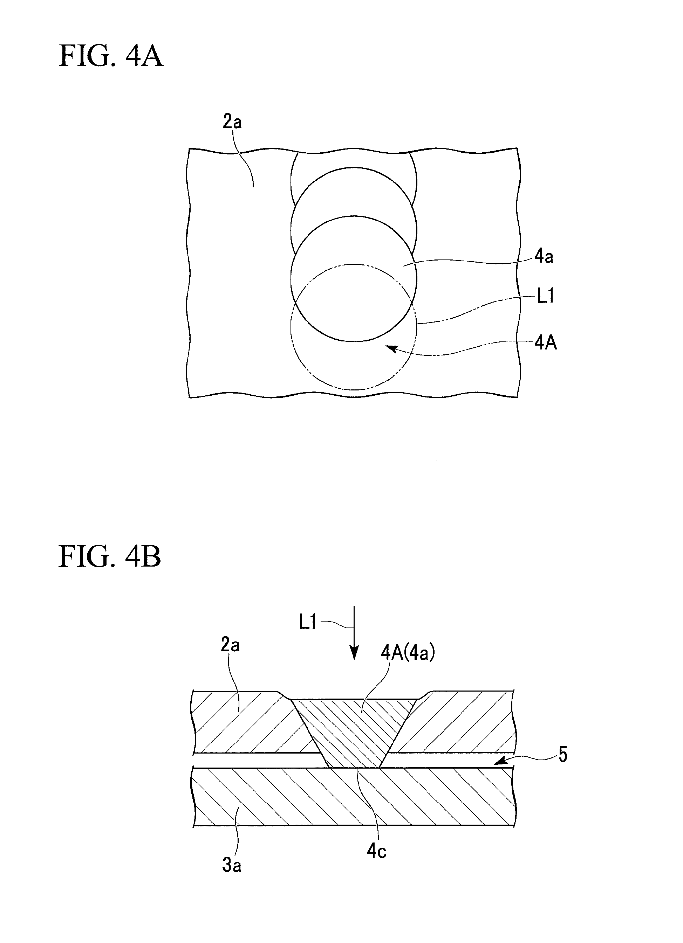

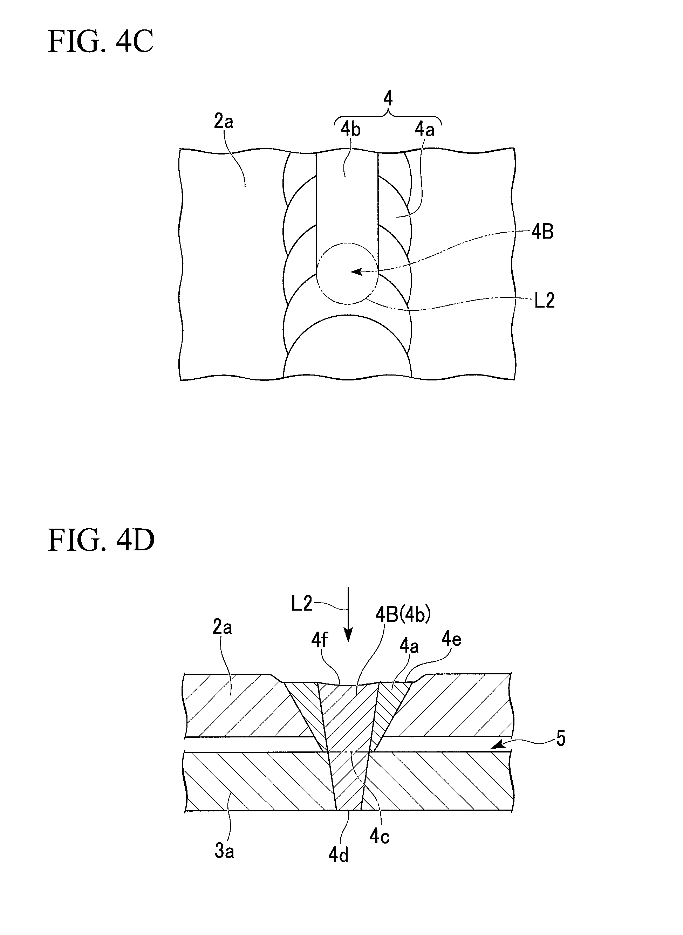

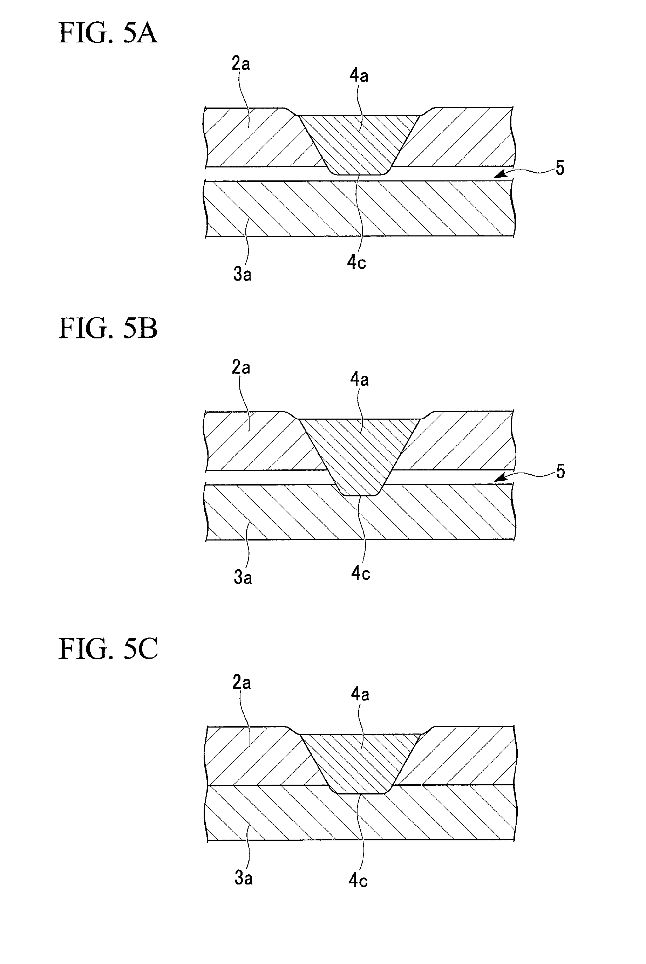

Fig. 3 is a flowchart showing a process flow of the member joining method according to the first embodiment of the present invention. Figs. 4A and 4B are process description views showing a first laser radiating process of the member joining method according to the first embodiment of the present invention. Figs. 4C and 4D are process description views of a second laser radiating process of the member joining method according to the first embodiment of the present invention. Figs. 4A and 4C are views showing the first end section 2a when seen in a laser radiation direction. Figs. 4B and 4D are cross-sectional views along a radiation optical axis of a laser in the joining section. Figs. 5A, 5B and 5C are schematic cross-sectional views showing a modified example of the melted solidification section of the member joining method according to the first embodiment of the present invention.

In the member joining method according to the embodiment, as shown in Fig. 3, the joining section 4 is formed by sequentially performing a member disposing process S1, a first laser radiating process S2 and a second laser radiating process S3.

The member disposing process S1 is a process of disposing a first member and a second member such that the first plate-shaped section and the second plate-shaped section overlap in the thickness direction.

In the process, the second end section 3a of the second pipe member 3 is inserted into the first end section 2a of the first pipe member 2, and they are supported by appropriate tools or the like to hold a positional relation in which the first end section 2a and the second end section 3a overlap in the thickness direction.

Here, the outer surface of the second end section 3a may come in contact with the inner surface of the first end section 2a, however, in the embodiment, the gap 5 is formed at most of the region from a size relation between the outer diameter D₃ of the second end section 3a and the inner diameter D₂ of the first end section 2a.

In addition, in the embodiment, since the joining section 4 is formed along the entire circumference in the circumferential direction of the first end section 2a and the second end section 3a, the first end section 2a and the second end section 3a are rotatably supported about the central axis.

Then, the member disposing process S1 is terminated.

Next, the first laser radiating process S2 is performed. The process is a process of forming the melted section in the thickness direction of the first plate-shaped section by radiating a laser beam to the first plate-shaped section in the region overlapping the second plate-shaped section.

In the process, while maintaining a state in which the first end section 2a and the second end section 3a overlap, as shown in Fig. 4B, a laser beam L1 is pulse-radiated to the first end section 2a from an upward and outward direction of the first end section 2a. Here, the first end section 2a and the second end section 3a are rotated about the central axes to radiate the laser beam L1. The radiation direction of the laser beam L1 may be inclined with respect to the vertical axis, but the laser beam is preferably radiated from an upper side toward a lower side in the vertical direction.

A spot-shaped radiation portion of the first end section 2a is heated by the pulse radiation of the laser beam L1, a substantially circular region of the first end section 2a is melted to form a melted section 4A, and the melted section 4A is moved toward the second end section 3a which is positioned at the lower side by the weight thereof. For this reason, a surface of the melted section 4A of a radiation side of the first end section 2a is slightly more concaved than the surface of the first end section 2a therearound.

When the pulse radiation of the laser beam L1 is stopped, the melted section 4A loses heat at the contact section with the periphery and the second end section 3a to be solidified, and the melted solidification section 4a is formed.

In the embodiment, pulse emission energy supplied from the laser beam L1 is set to a level at which the distal end surface 4c of the melted solidification section 4a abuts the second end section 3a to be stopped in a portion in which a size of the gap 5 is maximized.

As a radiation condition of the laser beam L1, for example, in the specific case of the first end section 2a and the second end section 3a as described above, preferably, a spot diameter in the surface of the first end section 2a is ϕ0.4 mm, an output is 600 W, and a radiation time is 5 ms.

The emission interval of the laser beam L1 is 200 ms, and set such that the melted sections 4A are continuously formed in the rotation direction.

For example, a relative movement amount of the radiation center on the first end section 2a is set to become 50% of the spot diameter. Accordingly, the melted sections 4A are intermittently formed without separating along with rotation of the first end section 2a and the second end section 3a (see Fig. 4A).

Since the melted section 4A is radiated and solidification is performed while emission of the laser beam L1 is stopped by intermittently radiating the laser beam, a scale pattern having a crescent shape is formed at the surface 4e of the melted solidification section 4a.

In this way, when the melted solidification section 4a is formed throughout the entire circumference of the first end section 2a, the first laser radiating process S2 is terminated.

In the process, when the melted section 4A is formed, since the gap 5 between the first end section 2a and the second end section 3a serves as an insulation space, thermal conduction from the melted section 4A is not generated at least at the beginning of formation of the melted section 4A. For this reason, most of the radiation energy of the laser beam L1 is used to melt the first end section 2a.

In a step in which the melted section 4A is melted down and comes in contact with the second end section 3a, since the pulse radiation of the laser beam L1 is terminated, a temperature of the melted section 4A is decreased and even when the melted section 4A comes in contact with the second end section 3a, the melting is not performed or only a very thin surface thereof is melted. For this reason, in the process, the melted solidification section 4a enters a state in which the melted solidification section 4a is not joined to the second end section 3a, or a low strength joining state.

In this way, in the process, since the melted solidification section 4a is not provided to be joined to the second end section 3a, as schematically shown in Fig. 4B, the distal end surface 4c of the melted solidification section 4a may not abut the second end section 3a.

For example, at least a gap between the distal end surface 4c of the melted solidification section 4a and the second end section 3a may be reduced to a certain level, or the distal end surface 4c may be in the vicinity of the second end section 3a as shown in Fig. 5A. In this case, the gap between the distal end surface 4c and the second end section 3a may be 0.04 mm (40 µm) or less.

Since a heat insulation effect is small in the case of such a small gap, an obstacle is not generated in the second laser radiating process S3 as described below.

In the process, there is no particular problem even when a substantial joining state is formed between the second end section 3a and the melted solidification section 4a. For example, as shown in Fig. 5B, the distal end surface 4c of the melted solidification section 4a may enter the second end section 3a unless the distal end surface 4c passes through the second end section 3a in the thickness direction.

In this case, although most of the melted solidification section 4a are formed by melting and solidifying the first end section 2a, since the second end section 3a is melted in the vicinity of the distal end surface 4c, an alloy of elements of the second end section 3a and the melted solidification section 4a is formed. For this reason, the melted solidification section 4a and the second end section 3a are joined to each other.

This is because the laser beam L1 is pulse-radiated at an output level at which whole of a thickness of the first end section 2a is melted at the radiation region, and thus a meltable range is limited and a melting time is also short even when heat is conducted to the second end section 3a.

Accordingly, in the melted solidification section 4a, the first end section 2a may be melted and solidified to a level at which the gap 5 is eliminated or reduced and the melted section of the first end section 2a, which does not become an alloy with the melted solidification section 4a, may remain at the melted solidification section 4a. It is not required that only the first end section 2a is melted and solidified.

The state in which the distal end surface 4c enters the second end section 3a is likely to be generated, for example, from a portion at which the first end section 2a and the second end section 3a abut each other at the beginning (see Fig. 5C), or the size of the gap 5 is small.

Next, the second laser radiating process S3 is performed. In the process, after the melted section is solidified to form the melted solidification section, the laser beam is radiated to the surface of the melted solidification section so as to focus on the second plate-shaped sections through the melted solidification section. Accordingly, the melted solidification section and the second plate-shaped section opposite to the melted solidification section are melted to form a welding section formed of an alloy of a material of the first plate-shaped section and a material of the second plate-shaped section, and the first plate-shaped section and the second plate-shaped section are joined via the welding section.

In the process, like the first laser radiating process S2, the first end section 2a and the second end section 3a are held in an overlapping state, and as shown in Fig. 4D, a laser beam L2 is continuously radiated to a central section in a widthwise direction of the melted solidification section 4a (the inside of the surface of the melted solidification section 4a) in the same radiation direction as the laser beam L1. That is, the laser beam L2 is radiated to the region inside the surface of the melted solidification section 4a. Here, the tubular member is rotated about the central axis to radiate the laser beam L2.

While the radiation position of the laser beam L2 may not be disposed on an accurate center in the widthwise direction of the melted solidification section 4a, the radiation position is preferably disposed on the distal end surface 4c to increase the efficiency of thermal conduction to the second end section 3a.

Here, a spot diameter of the laser beam L2 may be determined by a size of a width of the welding section 4b needed to join the first end section 2a and the second end section 3a with good joining strength. In the embodiment, for example, the spot diameter of the laser beam L2 is set to a dimension smaller than the spot diameter of the laser beam L1 and smaller than a diameter of the melted solidification section 4a formed at the surface of the first end section 2a.

An output of the laser beam L2 is set to an output level in which the melted solidification section 4a and the second end section 3a can be melted in the thickness direction depending on the rotation speed of the first end section 2a and the second end section 3a.

For example, as a radiation condition of the laser beam L2, in the case of the specific example, preferably, the rotation speed of the first end section 2a and the second end section 3a is 40 rpm, the spot diameter of the laser beam L2 on the surface of the melted solidification section 4a is ϕ0.2 mm, and the output is 200 W.

As the first end section 2a and the second end section 3a are rotated while performing continuous radiation of the laser beam L2 in this way, the radiation position of the laser beam L2 is relatively moved on the first end section 2a in the circumferential direction. Accordingly, the central section of the melted solidification section 4a is linearly scanned by the laser beam L2 (see Fig. 4C).

As a result, the radiation portion of the melted solidification section 4a is heated, the central section of the melted solidification section 4a is melted in a range substantially same as a spot diameter, and first, a melted section 4B is formed in the thickness direction of the melted solidification section 4a.

Since the distal end surface 4c of the melted solidification section 4a abuts or approaches the second end section 3a, when the melted section 4B reaches at the distal end surface 4c of the melted solidification section 4a, heat is conducted to the second end section 3a in a short time, and the second end section 3a is melted to expand the melted section 4B toward the second end section 3a.

For this reason, radiation energy by the laser beam L2 is smoothly transmitted from the melted solidification section 4a to the second end section 3a, the second end section 3a is continuously melted in a state that the melted section 4B in the melted solidification section 4a is hard to be expanded in the widthwise direction.

Here, in the vicinity of the contact part between the melted solidification section 4a and the second end section 3 a, an alloy of the part melted from the melted solidification section 4a and the part melted from the second end section 3a is formed.

When the distal end surface 4d of the melted section 4B reaches at the surface of the second end section 3a opposite to the first end section 2a, the radiation position of the laser beam L2 is moved in the circumferential direction. For this reason, the melted section 4B is sequentially solidified by heat radiation to surroundings thereof, and the welding section 4b extending in the thickness direction of the melted solidification section 4a and the second end section 3a is formed.

That is, as shown in Fig. 4C, the melted section 4B formed at the radiation position of the laser beam L2 is relatively moved in the circumferential direction of the first end section 2a, and the welding section 4b is continuously formed at a rear side thereof.

Here, the melted solidification section 4a and the second end section 3a are melted, and the melted section 4B formed in the thickness direction tends to be lowered by the weight thereof. For this reason, the surface 4f of the welding section 4b near the first end section 2a is slightly more concaved than the melted solidification section 4a, and a scale shape pattern of the surface 4e of the melted solidification section 4a is smoothened in the scanning direction of the laser beam L2. Accordingly, the surface 4f of the welding section 4b is formed on the surface 4e, to which the laser beam L2 is radiated, at a belt shape region having a smaller width than the melted solidification section 4a formed in the first laser radiating process S2.

In this way, when the laser beam L2 is radiated on a whole circumference of the melted solidification section 4a and the welding section 4b is formed throughout the entire circumference in the circumferential direction, the second laser radiating process S3 is terminated.

Hereinabove, the joining section 4 is formed throughout the entire circumference in the circumferential direction of the first end section 2a and the second end section 3b, and the first pipe member 2 and the second pipe member 3 are joined to each other.

In the embodiment, the state in which the melted solidification section 4a abuts or approaches the second end section 3a is formed by the first laser radiating process S2, and then the second laser radiating process S3 is performed. In this way, since the laser radiation is performed in a two-step manner, even when there is the large gap 5 having a probability of generating defects of the laser welding, in the second laser radiating process S3, the laser radiation is performed on the welding portion which has a small gap 5 or has no gap. On the other hand, as disclosed in the related art, when the first laser radiating process S2 is omitted and the laser welding is performed by the laser beam L2 only, the radiation energy of the laser beam L2 radiated to the first end section 2a is hardly transmitted to the second end section 3a at a portion at which the gap 5 is large. For this reason, even when the radiation region of the laser beam L2 in the first end section 2a is melted, the second end section 3a is not melted.

As a result, welding defects are generated. For example, a progress of the melting of the second end section 3a may be delayed and formation of the joining state may be insufficient, or the melted section of the first end section 2a is melted down in the gap 5, a through-hole remains only in the first end section 2a, and thus the joining section in which the second end section 3a is melted is not formed.

In particular, in the case of the welding of the pipe member functioning to form the water-tight (liquid-tight) state or the air-tight state, when welding defects are generated even partially, even if there is no problem related to the joining strength or the like, since the water-tight (liquid-tight) state or the air-tight state is not held, air-tightness becomes poor.

According to the embodiment, such welding defects can be securely prevented.

In the embodiment, the state in which the gap 5 is substantially reduced can be formed by radiating the laser beam L1 only from the outside of the first end section 2a. For this reason, for example, in comparison with the case in which machining precision is increased to reduce the gap 5 between the first end section 2a and the second end section 3a, workability can be improved and manufacturing cost can also be reduced.

In the embodiment, since the shapes of the first pipe member 2 and the second pipe member 3 are not particularly limited as long as the laser welding can be performed from a side of the first end section 2a, the good laser welding can be performed between the members having various shapes.

For example, as disclosed in the technology of Japanese Patent Registration No. 2868750, when the gap between the pipe members is reduced as the pipe diameter is increased from the inside of the pipe member, the joining to the curved pipe to which a tool for enlarging a diameter cannot be inserted as shown in Fig. 1 cannot be easily performed. On the other hand, in the embodiment, the joining to the curved pipe also becomes easy.

According to the embodiment, as the distal end surface 4c abuts or approaches the second end section 3a, the laser beam L2 is radiated from above the portion having good thermal conduction to perform the second laser radiating process. For this reason, even when radiation energy of the laser beam L2 is small, the melted section 4A can be efficiently formed. Accordingly, upon the laser welding, quantity of heat applied to the first end section 2a and the second end section 3a can be reduced. As a result, for example, influence of the heat on the other portion of the first pipe member 2 and the second pipe member 3 or the other member assembled to the first pipe member 2 and the second pipe member 3 can be reduced.

### [First Modified Example]

Next, a first modified example of the first embodiment will be described.

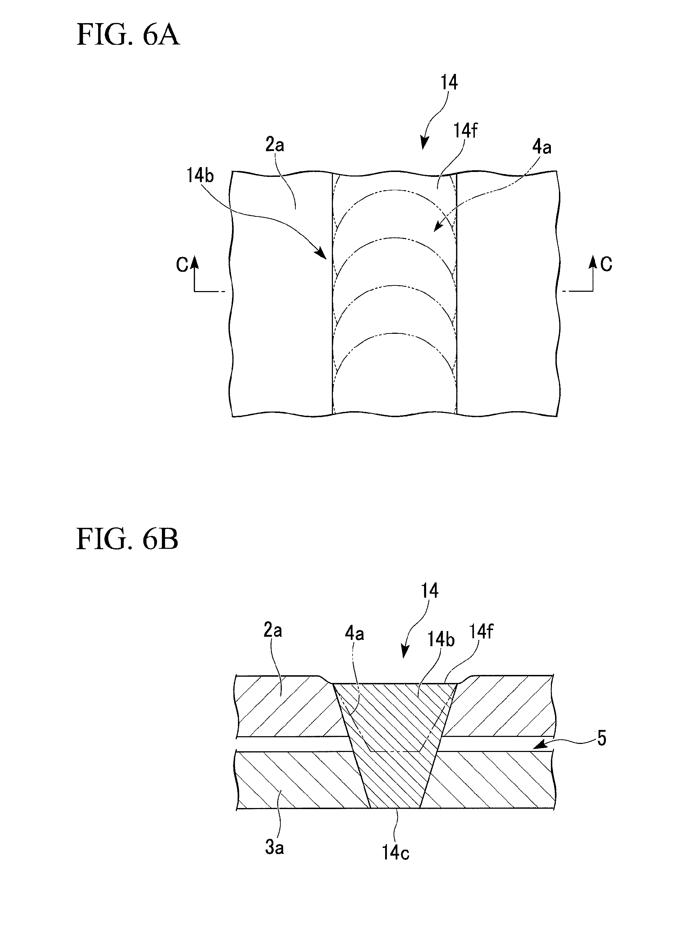

Fig. 6A is a plan view showing a member joining structure of the first modified example of the first embodiment of the present invention. Fig. 6B is a cross-sectional view taken along line C-C of Fig. 6A.

As shown in Figs. 6A and 6B, a joining section 14 serving as a member joining structure according to the first modified example can be used instead of the joining section 4 of the joint pipe 1 according to the first embodiment. The joining section 14 includes a welding section 14b instead of the welding section 4b of the joining section 4 according to the first embodiment.

The welding section 14b is a part of the welding section 4b according to the first embodiment having the same width as the melted solidification section 4a, which is previously formed. For this reason, the welding section 14b is formed of an alloy obtained by melting the entire melted solidification section 4a and the second end section 3 a, and a distal end surface 14c of the welding section 14b is exposed to a surface of the second end section 3a opposite to the first end section 2a.

When seen from the first end section 2a side, the joining section 14 is continuously formed throughout the entire circumference in the circumferential direction in a belt shape having the same width as the melted solidification section 4a, and a surface 14f smoothly concaved from the surface of the first end section 2a toward the second end section 3a extends in the circumferential direction. For this reason, a scale shape pattern of the melted solidification section 4a is smoothened.

As shown in Fig. 3, the member joining method of the modified example forming the joining section 14 performs the member disposing process S1 and the first laser radiating process S2 like the member joining method according to the first embodiment. After that, a second laser radiating process S13 substantially the same as the member joining method according to the first embodiment is performed.

Hereinafter, the member joining method will be described focusing on differences from the member joining method according to the first embodiment.

The second laser radiating process S13 of the modified example is different from the second laser radiating process S3 in that a spot diameter of the laser beam L2 in the second laser radiating process S3 of the first embodiment is substantially equal to the spot diameter of the laser beam L1 in the first laser radiating process S2.

In the process, the laser beam L2 scans the entire melted solidification section 4a. For this reason, the entire the melted solidification section 4a and the second end section 3a opposite to the melted solidification section 4a are melted to form the welding section 14b.

According to the joining section 14 of the modified example, since the width of the welding section 14b is larger than that of the welding section 4b of the joining section 4 of the first embodiment, the joining strength can be further improved.

According to the joining section 14 of the modified example, the scale shape pattern of the melted solidification section 4a is uniformized, and the exterior is improved.

In addition, the modified example is an example of the case in which the melted solidification section 4a having a larger range than the distal end surface 14c is melted by the laser beam L2.

### [Second Modified Example]

Next, a second modified example of the embodiment will be described.

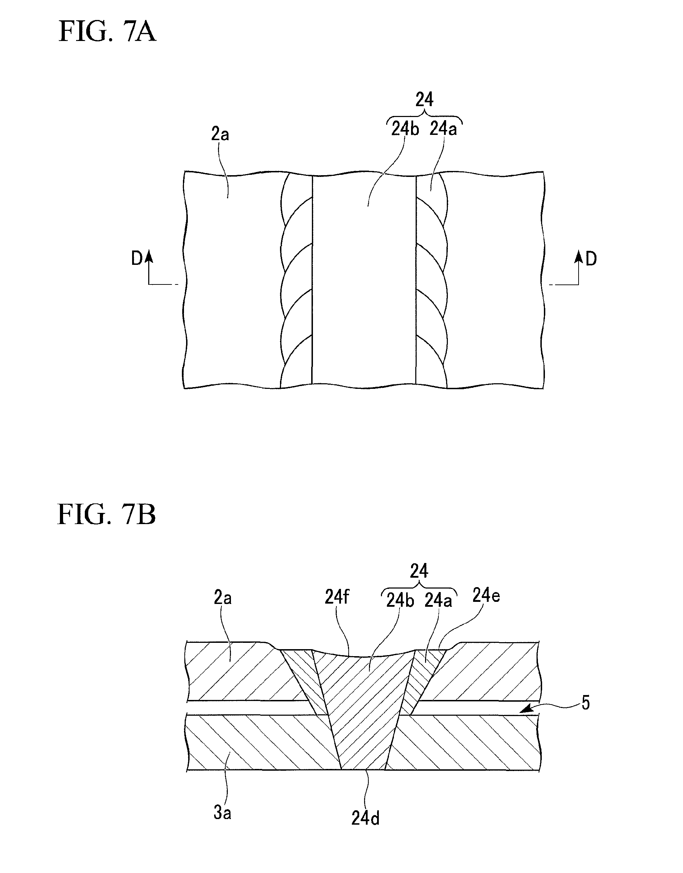

Fig. 7A is a plan view showing a member joining structure of a second modified example of the first embodiment of the present invention. Fig. 7B is a cross-sectional view taken along line D-D of Fig. 7A.

As shown in Figs. 7A and 7B, a joining section 24 serving as the member joining structure according to the modified example can be used instead of the joining section 4 of the joint pipe 1 of the first embodiment. The joining section 24 includes a melted solidification section 24a and a welding section 24b, instead of the melted solidification section 4a and the welding section 4b of the joining section 4 of the first embodiment.

The melted solidification section 24a is formed as the material of the first end section 2a is melted and solidified just like the melted solidification section 4a of the first embodiment. This modified example is differing only in that the melted solidification section 24a is formed at a larger region than the melted solidification section 4a of the first embodiment.

In the modified example, as will be described below, the melted solidification section 24a is formed by installing the plurality of melted solidification sections 4a of the first embodiment in the widthwise direction in parallel.

The welding section 24b is similar to the welding section 4b of the first embodiment, the materials of the first end section 2a and the second end section 3a are melted to become an alloy of elements thereof. This modified example is differing only in that the welding section 24b is formed to have a larger width than the welding section 4b corresponding to the larger width than the melted solidification section 4a of the first embodiment.

A surface 24e of the melted solidification section 24a has the same scale shape pattern as the surface 4e of the melted solidification section 4a, and a surface 24f of the welding section 24b has the same smooth concave surface as the surface 4f of the welding section 4b.

As shown in Fig. 3, the member joining method of the second modified example to form the joining section 24 performs the same member disposing process S1 as the member joining method according to the first embodiment, and performs substantially the same first laser radiating process S22 and second laser radiating process S23 as the member joining method in the first embodiment.

Hereinafter, the member joining method will be described focusing on differences from the member joining method according to the first embodiment.

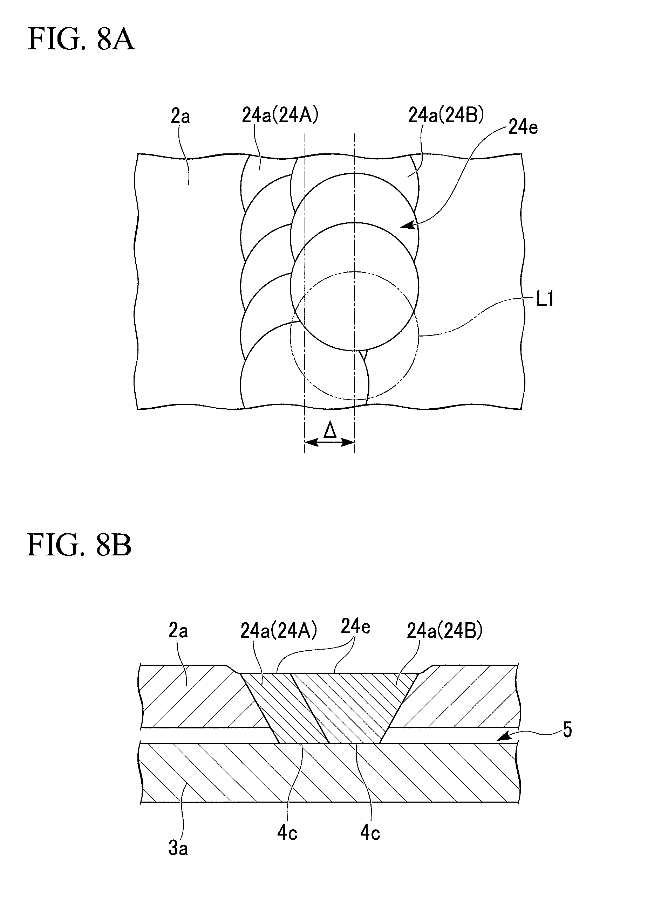

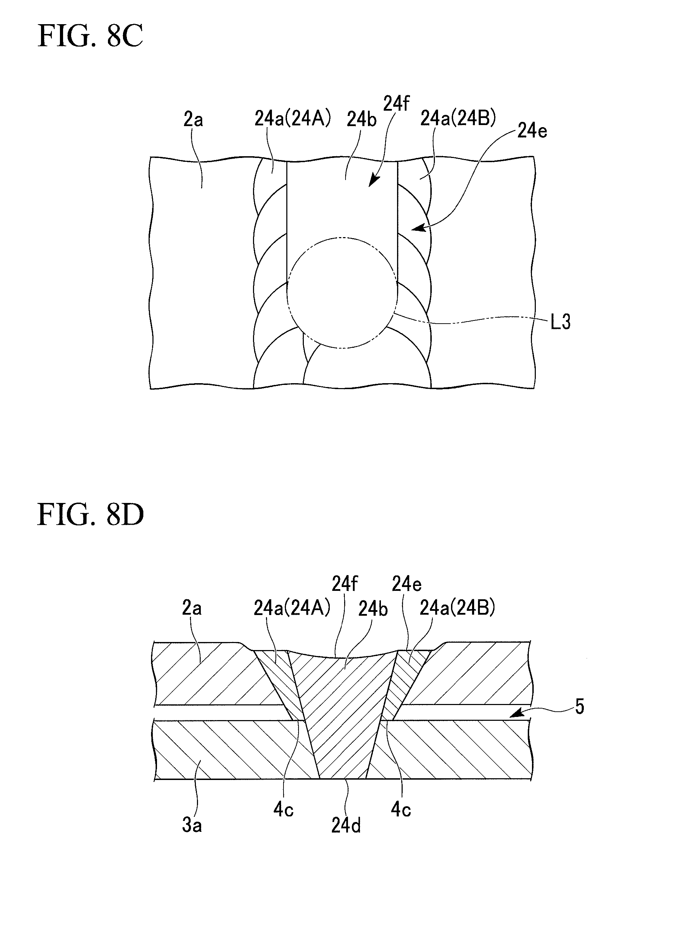

Figs. 8A and 8B are process description views showing the first laser radiating process of the member joining method of the second modified example of the first embodiment of the present invention. Figs. 8C and 8D are process description views of the second laser radiating process of the member joining method of the second modified example of the first embodiment of the present invention. Figs. 8A and 8C are views showing the first end section 2a when seen in a laser radiation direction. Figs. 8B and 8D are cross-sectional views along a radiation optical axis of a laser of the melted solidification section 24a.

In the first laser radiating process S22 of this modified example, as shown in Figs. 8A and 8B, as in the first laser radiating process S2 according to the first embodiment, a melted solidification unit section 24A the same as that of the melted solidification section 4a is formed throughout the entire circumference of the first end section 2a.

Next, the radiation position of the laser beam L1 is set to be deviated toward one side in the widthwise direction of the melted solidification unit section 24A by Δ such that a portion of the laser beam L1 overlaps the melted solidification unit section 24A. Then, like the first laser radiating process S2 of the first embodiment, a melted solidification unit section 24B is formed.

Accordingly, as the melted solidification unit sections 24A and 24B are disposed in parallel in the widthwise direction, the melted solidification section 24a having a larger width than the melted solidification section 4a is formed.

Then, the first laser radiating process S22 is terminated.

In the process, a shift amount Δ of the radiation position of the laser beam L1 may be a dimension smaller than the spot diameter of the laser beam L1. However, since the second end section 3a can be easily melted in the next process, it is more preferable that the dimension has no gap in the widthwise direction on the second end section 3a between the distal end surface 4c of the melted solidification unit section 24A and the distal end surface 4c of the melted solidification unit section 24B.

In the process, while the case in which the melted solidification section 24a is formed by two rows of the melted solidification unit sections 24A and 24B has been described, the melted solidification section 24a having a larger width may be formed by arranging the melted solidification unit sections in parallel in three rows or more.

For the melted solidification section 4a, as the shift amount Δ of the radiation position of the laser beam L1 is varied, the disposition pitch of melted solidification unit sections may be varied to adjust the width of the melted solidification section 24a.

Next, as shown in Figs. 8C and 8D, the second laser radiating process S23 of the modified example is different from the second laser radiating process S3 only in that the laser beam L3 obtained by varying the spot diameter of the laser beam L2 in the second laser radiating process S3 of the first embodiment to match the width of the melted solidification section 24a is radiated to form the welding section 24b.

Similar to the second laser radiating process S3 of the first embodiment, the welding section 24b is formed. Accordingly, the joining section 24 is formed to join the first end section 2a and the second end section 3a.

The spot diameter of the laser beam L3 in the process is less than the width of the melted solidification section 24a, and may be determined from a size of the width of the welding section 24b needed to join the first end section 2a and the second end section 3a with good joining strength.

The spot diameter of the laser beam L3 may be equal to the spot diameter of the laser beam L1. In this case, since the same laser radiation optical system can be used in the first laser radiating process S22 and the second laser radiating process S23, for example, the spot diameter of the laser radiation optical system may not be varied, and working efficiency can be improved.

While the laser beam L3 may be radiated anywhere as long as the radiation position is disposed on the surface 24e of the melted solidification section 24a, in order to increase efficiency of thermal conduction from the melted section, a laser beam L3 may be radiated about a radiation position in the widthwise direction. In addition, the laser beam L3 is radiated from the radiation position on the distal end surface 4c.

According to the member joining method of the modified example, since the plurality of melted solidification unit sections are arranged in parallel to form the melted solidification section 24a, even when an output of the laser beam L1 in the first laser radiating process S22 is low, the melted solidification section 24a having a large width can be easily formed.

As the melted solidification section 24a having a large width is formed, since thermal conduction from the melted solidification section 24a to the second end section 3a in the second laser radiating process S23 becomes better, the welding section 24b can be securely and easily formed by the laser beam L3.

In the modified example, since the spot diameter of the laser beam L3 can be appropriately set in the width of the melted solidification section 24a, in particular, the members that require large joining strength are appropriately joined.

### [Third Modified Example]

Next, a third modified example of the embodiment will be described.

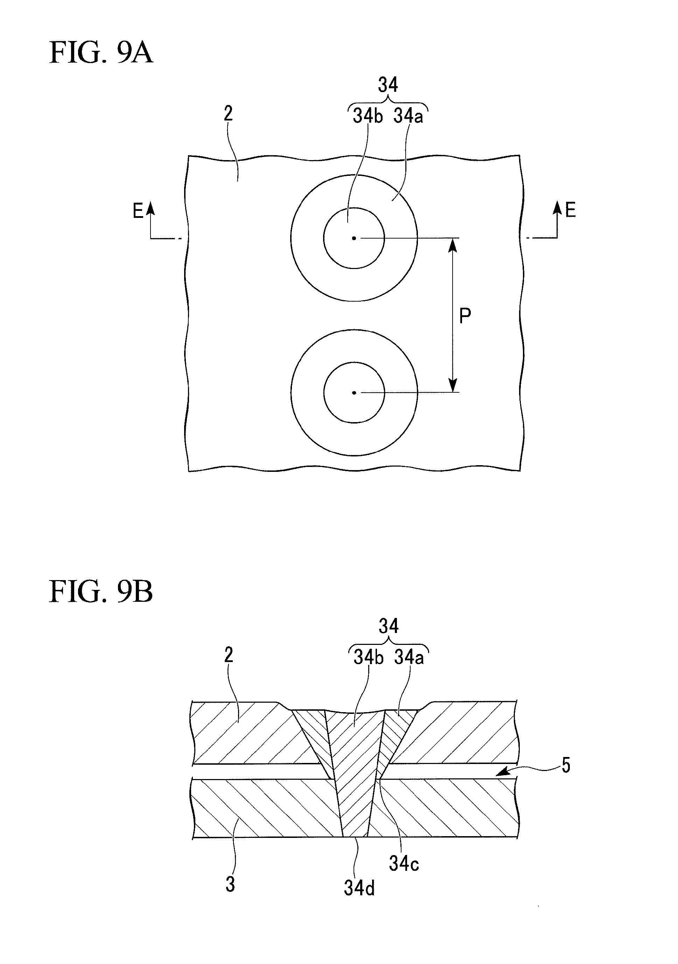

Fig. 9A is a plan view showing a member joining structure of the third modified example of the first embodiment of the present invention. Fig. 9B is a cross-sectional view taken along line E-E of Fig. 9A.

As shown in Figs. 9A and 9B, a joining section 34 serving as a member joining structure according to the modified example can be used instead of the joining section 4 of the joint pipe 1 of the first embodiment. The joining section 34 includes a melted solidification section 34a and a welding section 34b, instead of the melted solidification section 4a and the welding section 4b of the joining section 4 according to the first embodiment.

Like the melted solidification section 4a according to the first embodiment, the melted solidification section 34a is a frusto-conical part formed by melting and solidifying the material of the first end section 2a. The plurality of melted solidification sections 34a are installed on the first end section 2a in the circumferential direction (the longitudinal direction of Fig. 9A) of the first end section 2a at intervals. That is, the third modified example is different from the first embodiment in that the melted solidification sections 34a are intermittently formed in dot shapes in the circumferential direction, whereas the melted solidification section 4a of the first embodiment is formed in a belt shape extending in the circumferential direction of the first end section 2a.

A disposition pitch of the melted solidification section 34a is not limited to a constant value but may be varied depending on a place. In the modified example, for example, the disposition pitch is a constant value P.

Similar to the welding section 4b of the first embodiment, in the welding section 34b, the materials of the first end section 2a and the second end section 3a are melted to form an alloy of the elements thereof. The welding sections 34b are formed in a frusto-conical shape in a thickness direction of the melted solidification section 34a and the second end section 3a in a substantially central section of the melted solidification section 34a.

For this reason, in the modified example, the gap 5 remains between the first end section 2a and the second end section 3a between the joining sections 34. The modified example is an example in which a space between the first end section 2a and the second end section 3a is not in the water-tight (liquid-tight) state or the air-tight state.

As shown in Fig. 3, the member joining method of the modified example forming the joining section 34 performs the same member disposing process S1 as the member joining method according to the first embodiment, and substantially the same first laser radiating process S32 and second laser radiating process S33 as the member joining method according to the first embodiment.

Hereinbelow, the third modified example will be described focusing on differences from the member joining method according to the first embodiment.

In the first laser radiating process S32 of the modified example, an emission interval of the laser beam L1 in the first laser radiating process S2 of the first embodiment is set, the first end section 2a and the second end section 3a are rotated, and the melted sections 4A (see Fig. 4B) are intermittently formed in the rotation direction.

For example, a relative movement amount of a radiation center on the first end section 2a becomes a disposition pitch P.

The melted section 4A is solidified through heat radiation to form the melted solidification section 34a. When the first end section 2a and the second end section 3a are rotated once, the plurality of melted solidification sections 34a are formed in the circumferential direction of the first end section 2a and the second end section 3a. Like the distal end surface 4c of the melted solidification section 4a of the first embodiment, a distal end surface 34c of the melted solidification section 34a abuts or approaches the second end section 3a.

With this, the first laser radiating process S32 is terminated.

Next, the second laser radiating process S33 of the modified example is performed.

The process is different from the second laser radiating process S3 of the first embodiment in that the laser beam L2 is pulse-radiated at a position at which the radiation position overlaps the central section of the melted solidification sections 34a, whereas the laser beam L2 is continuously radiated in the second laser radiating process S3 of the first embodiment.

The radiation condition of the laser beam L2 is set to supply sufficient radiation energy such that the melted solidification section 34a and the second end section 3a are melted to form the welding section 34b in the thickness direction of the melted solidification section 34a and the second end section 3a.

For example, in the specific example of the first end section 2a and the second end section 3a, preferably, a spot diameter in the surface of the first end section 2a is set to ϕ0.2 mm, an output is set to 750 W higher than L1, and a radiation time is set to 1 ms.

In this way, the welding sections 34b are formed at positions of the melted solidification sections 34a. Accordingly, the joining sections 34 are formed to join the first end section 2a and the second end section 3a.

In the member joining method of the modified example, since the joining sections 34 are intermittently formed in the circumferential direction, when the joining of the first end section 2a and the second end section 3 a does not require water-tightness (liquid-tightness) or air-tightness, the joining section 34 can be formed by a small amount of laser radiation amount.

In the spot-shaped joining, since an area of the joining part is small, when the gap between the first end section 2a and the second end section 3a is large, welding defects are more likely to be generated. However, in the modified example, as the melted solidification sections 34a are formed, since the welding sections 34b can be formed from the state in which there is no gap or a slight gap is formed by the first laser radiating process S32, joining defects can be prevented.

### [Second embodiment]

A member joining structure according to a second embodiment of the present invention will be described.

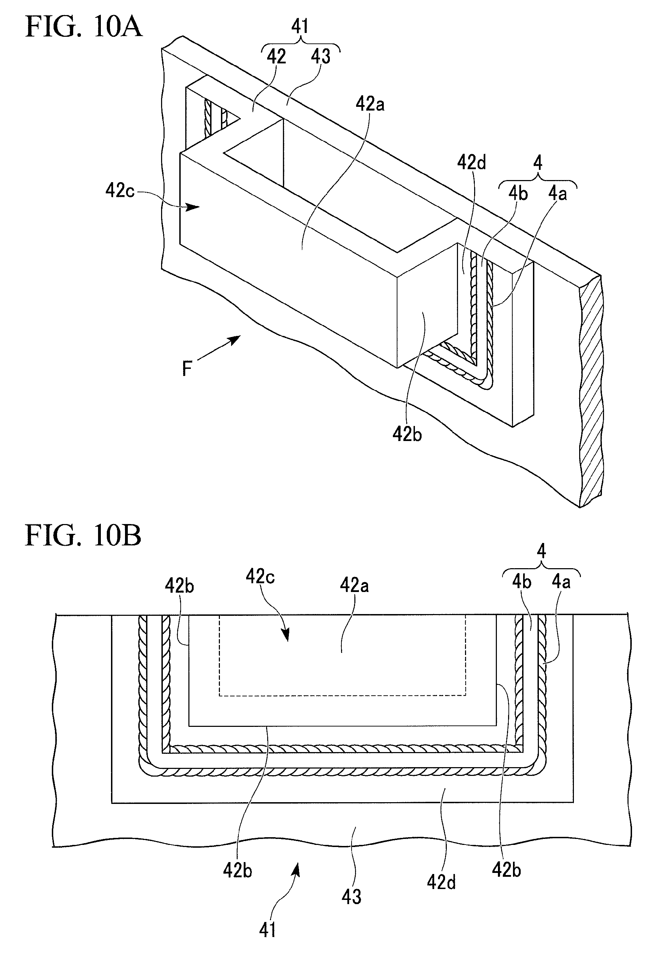

Fig. 10A is a schematic perspective view showing the member joining structure according to the second embodiment of the present invention. Fig. 10B is a plan view when seen from an arrow F of Fig. 10A.

In the first embodiment, the first plate-shaped section and the second plate-shaped section are constituted by the first end section 2a and the second end section 3a of the first pipe member 2 and the second pipe member 3, and the curved plate-shaped sections are joined. On the other hand, the member joining structure according to the first embodiment is different from the first embodiment in that the first plate-shaped section and the second plate-shaped section are constituted by flat plate sections.

Hereinafter, the member joining structure will be described as an example of a joining body 41 shown in Figs. 10A and 10B.

The joining body 41 is a member obtained by joining a socket member 42 (a first member) and a holding plate 43 (a second member, a second plate-shaped section) using the same joining section 4 as the first embodiment.

The socket member 42 is a member configured to form a hole space having a rectangular section, having a hexahedral shape of which one side surface is opened, by joining the holding plates 43, and for example, used as a receiving section, a member locking section, or the like.

The socket member 42 includes a bag-shaped section 42c having a shape in which side plate sections 42b extend from three sides of a rectangular flat plate section 42a, and a flange section 42d (a first plate-shaped section) extending from the end section of the side plate section 42b of the bag-shaped section 42c toward the outside of the side section and arranged in the same plane.

For this reason, the flange section 42d constitutes a plate-shaped section extending outward from three side surfaces of the bag-shaped section 42c.

The holding plate 43 is a member having a rectangular flat plate section that can overlap at least the entire flange section 42d of the socket member 42.

As shown in Fig. 10B, the socket member 42 is joined to the holding plate 43 by the joining section 4 formed in the thickness direction of the flange section 42d and the holding plate 43 in a state in which the flange section 42d overlaps the holding plate 43.

The joining section 4 of the embodiment has the melted solidification section 4a having a belt shape to be continued along the side plate section 42b of the socket member 42 at an intermediate section in the widthwise direction of the flange section 42d.

Then, the welding section 4b extends in the thickness direction of the melted solidification section 4a and the holding plate 43 while forming the same belt shape at the central section of the melted solidification section 4a.

For this reason, the joining sections 4 are joined to form the outer circumferential sections of three sides, except for an opening of the bag-shaped section 42c, in a water-tight (liquid-tight) state or an air-tight state.

The joining section 4 can be formed in substantially the same shape as that formed according to the member joining method of the first embodiment.

Hereinafter, the second embodiment will be described focusing on differences from the first embodiment.

In the member disposing process S1 according to this embodiment, the socket member 42 is disposed to overlap the flange section 42d on the holding plate 43, and is held on a movable stage (not shown) movable with respect to a laser radiation apparatus (not shown) in parallel in a horizontal plane.

In the first laser radiating process S2 of the embodiment, the radiation condition of the laser beam L1 is appropriately varied depending on the material, a plate thickness, or the like, of the flange section 42d and the holding plate 43. Then, the laser beam L1 is pulse-radiated in a vertical direction downward from above the flange section 42d. At the same time, the radiation position with respect to the flange section 42d of the laser beam L1 is relatively moved by a movable stage, and the laser beam L1 scans in a direction along the side plate section 42b.

In the second laser radiating process S3 of the embodiment, the radiation condition of the laser beam L2 is appropriately varied in the same manner as the laser beam L1, and the laser beam L2 is continuously radiated in a vertical direction downward from above the melted solidification section 4a. At the same time, the radiation position with respect to the melted solidification section 4a of the laser beam L2 is relatively moved by the movable stage, and the laser beam L2 scans in a direction along a center line of the melted solidification section 4a.

In this way, the joining section 4 is formed, and the socket member 42 is joined to the holding plate 43.

According to this embodiment, like the first embodiment, even when the gap is likely to be generated between the members to be welded, welding defects can be easily prevented.

In the description of the embodiments and the modified examples, in the first laser radiating process and the second laser radiating process, an example of the case in which the radiation position of the laser beam is relatively moved by fixing a position of the laser beam and moving the first plate-shaped section and the second plate-shaped section has been described. However, relative movement in which the positions of the first plate-shaped section and the second plate-shaped section are fixed and the laser beam is moved may be performed. In addition, both the first and second plate-shaped sections and the laser beam may be moved.

In the description of the embodiments and the modified examples, an example of the case in which a distal end surface of the welding section is exposed to a surface of the second plate-shaped section such that the welding section is formed throughout in the thickness direction of the second plate-shaped section has been described. However, the distal end surface of the welding section may not be exposed to the surface of second plate-shaped section.

The distal end surface of the welding section may remain in the second plate-shaped section as long as necessary joining strength can be obtained.

In the description of the second embodiment, an example of the case in which the joining section 4 is formed using the flange section 42d of the socket member 42 as the first plate-shaped section and using the holding plate 43 as the second plate-shaped section has been described. However, a member of one side to which the laser beam is likely to be radiated can be appropriately selected for the first plate-shaped section.

For example, in the case of the second embodiment, the joining section 4 may be formed using the flange section 42d of the socket member 42 as the second plate-shaped section and using the holding plate 43 as the first plate-shaped section.

In the description of the embodiments and the modified examples, while an example in which the first laser radiating process and the second laser radiating process are performed while the radiation condition of the laser beam is constant has been described, the radiation condition of the laser beam may be varied depending on a place.

For example, when it is previously known that the thicknesses of the first plate-shaped section and the second plate-shaped section or the gap therebetween are varied depending on the place, as the radiation condition of the laser beam is varied at each scanning position, better laser welding becomes possible.

For example, in the portion having an originally small gap, since there is no need to remove or reduce the gap by the melted solidification section, laser radiation of a low output becomes possible.

For example, in the portion having an originally large gap, in the first laser radiating process, even when the melted solidification section 4a is melted at a narrow region, a hole may be formed in the first plate-shaped section before the melted section arrives at the second plate-shaped section. In such a portion, when a radiation range of the laser beam is large, the melted section can abut the second plate-shaped section before the hole is formed in the first plate-shaped section.

In the description of the embodiments and the modified examples, an example of the case in which the welding section is formed in the second laser radiating process after the entire melted solidification section is formed in the first laser radiating process has been described. However, as the radiation timing of the laser beam radiated in the processes is offset, after a portion of the melted solidification section is formed, the second laser radiating process is performed in sequence from the portion at which the melted solidification section is formed. Accordingly, the first laser radiating process and the second laser radiating process may be performed in parallel at different portions. Here, since the welding is performed at the same speed in the first laser radiating process and the second laser radiating process, the radiation condition of the laser beam is set to be appropriate for the set speed.

For example, in the first embodiment, two laser beam sources configured to radiate the laser beams L1 and L2 may be disposed apart from each other, and the melted solidification section 4a and the welding section 4b may be formed while the first end section 2a and the second end section 3a are rotated once.

According to this method, in a state in which a decrease in temperature of the melted solidification section 4a is smaller, the second laser radiating process S3 can be performed. For this reason, radiation energy of the laser beam L2 can be further reduced.

While the embodiment of the present invention has been described in detail with reference to the accompanying drawings, a specific configuration is not limited to the embodiments but design changes and so on may fall in the scope of the present invention without departing from the spirit of the present invention. Further, of course, configurations described in the embodiments may be appropriately combined. In addition, the present invention is not limited to the above-mentioned description but may be limited by the scope of the accompanying claims.

### [Industrial Applicability]

According to the above discribed member joining method, the member joining structure, and the joint pipe, even when the gap is likely to be generated between the members to be laser-welded, the method of easy preventing welding defects can be provided, and the member joining structure and the joint pipe in which the gap cannot be easily formed between the members can be provided.

### [Reference Signs List]

- 1: joint pipe
- 2: first pipe member (first member)
- 2a: first end section (first plate-shaped section)
- 3: second pipe member (second member)
- 3a: second end section (second plate-shaped section)
- 4, 14, 24, 34: joining section (member joining structure)
- 4a, 24a, 34a: melted solidification section
- 4A, 4B: melted section
- 4b, 14b, 24b, 34b: welding section
- 5: gap
- 24A, 24B: melted solidification unit section
- 41: joining body
- 42: socket member (first member)
- 42d: flange section (first plate-shaped section)
- 43: holding plate (second member, second plate-shaped section)
- L1, L2, L3: laser beam
- S1: member disposing process
- S2, S22, S32: first laser radiating process

- S3, S23, S33: second laser radiating process

## Claims

1. A member joining method of joining a first plate-shaped section of a first member and a second plate-shaped section of a second member by laser welding, the member joining method comprising:
a member disposing process of disposing the first member and the second member such that the first plate-shaped section and the second plate-shaped section overlap in a thickness direction;
a first laser radiating process of forming a melted section in which the first plate-shaped section is melted in the thickness direction by radiating a laser beam to the first plate-shaped section in a region overlapping the second plate-shaped section; and
a second laser radiating process of, after solidifying the melted section to form a melted solidification section, radiating a laser beam to a surface of the melted solidification section so as to forcus the laser beam on the second plate-shaped section through the melted solidification section, melting the melted solidification section and the second plate-shaped section which is faced to the melted solidification section, forming a welding section formed of an alloy from a material of the first plate-shaped section and a material of the second plate-shaped section, and joining the first plate-shaped section and the second plate-shaped section via the welding section.

2. The member joining method according to claim 1, wherein, in the first laser radiating process, the laser beam is pulse-radiated, and
in the second laser radiating process, the laser beam is continuously radiated.

3. The member joining method according to claim 1 or 2, wherein, in the first laser radiating process, a radiation position of the laser beam is relatively moved with respect to the first plate-shaped section such that the melted section is formed to continue in a belt shape.

4. The member joining method according to claim 1, wherein, in the second laser radiating process, the laser beam is radiated to a region inside the surface of the melted solidification section.

5. The member joining method according to claim 1, wherein the first plate-shaped section and the second plate-shaped section are formed in a tubular shape, and
in the member disposing process, the second plate-shaped section is inserted and disposed into the first plate-shaped section.

6. The member joining method according to claim 5, wherein, in the first laser radiating process, the melted section is formed to continue throughout the entire circumference of the first plate-shaped section, and
in the second laser radiating process, the welding section is formed to continue throughout the entire circumference of the first plate-shaped section and the second plate-shaped section.

7. A member joining structure formed by disposing a first plate-shaped section of a first member and a second plate-shaped section of a second member to overlap, and joining the members by laser welding, the member joining structure comprising:
a welding section formed of an alloy of a material of the first plate-shaped section and a material of the second plate-shaped section, and formed in a thickness direction of a region in which the first plate-shaped section and the second plate-shaped section overlap; and
a melted solidification section formed by melting and solidifying the first plate-shaped section in a region adjacent to the welding section.

8. The member joining structure according to claim 7, wherein the welding section has a surface of an end section of the first plate-shaped section side more concave than a surface of the melted solidification section.

9. A joint pipe formed by inserting a second pipe member into a first pipe member, and joining the first pipe member and the second pipe member by laser welding at a position at which the first pipe member and the second pipe member overlap in a radial direction, the joint pipe comprising:
a welding section formed of an alloy of a material of the first pipe member and a material of the second pipe member, and formed in a thickness direction at a region in which the first pipe member and the second pipe member overlap; and
a melted solidification section formed by melting and solidifying the first pipe member at a region adjacent to the welding section.
